# EUROPÄISCHE PATENTSCHRIFT

(11) **EP 2 570 673 B1**
(45) Veröffentlichungstag und Bekanntmachung des Hinweises auf die Patenterteilung: **07.05.2014**
(21) Anmeldenummer: 11007444.0
(22) Anmeldetag: 13.09.2011
(51) Int. Cl.: F04C 18/344, F04C 25/02

(54) **Elektrische Vakuumpumpe für ein Kraftfahrzeug**
Electric vacuum pump for a vehicle
Pompe à vide électrique pour véhicule automobile

(43) Veröffentlichungstag der Anmeldung: 20.03.2013
(73) Patentinhaber: Pierburg Pump Technology GmbH, 41460 Neuss (DE)
(72) Erfinder: Wittich, Michael, 50345 Hürth (DE); Rombach, Michael, 41470 Neuss (DE)
(74) Vertreter: Eberlein, Jasper

(56) Entgegenhaltungen:
- DE-A1-102006 058 980
- FR-A- 1 091 878
- US-A- 2 674 953
- US-A1- 2005 147 517

## Beschreibung

Die Erfindung bezieht sich auf eine elektrische Vakuumpumpe für ein Kraftfahrzeug, nachfolgend Kfz-Vakuumpumpe genannt.

Eine derartige Kfz-Vakuumpumpe ist u.a. bekannt aus DE 10 2006 058 980 A1. Die Vakuumpumpe weist ein Motormodul und ein axialen unmittelbar daran anschließendes Pumpenmodul mit einer fliegend gelagerten Pumpenrotorwelle auf. Das zwischen dem Motorrotor und dem Pumpenmodul angeordnete Wälzlager wird mit Ansaugluft gekühlt, die während des Betriebs der Vakuumpumpe von einem Ansaugstutzen aus kommend in das Pumpenmodul strömt. Sobald in dem Pumpenmodul ein nur geringfügig niedrigerer Druck herrscht als im Bereich des Ansaugstutzens bzw. des Wälzlagers, was zur Herstellung einer Strömung im Prinzip unvermeidlich ist, kann das Wälzlager-Schmiermittel in Richtung Pumpenmodul abgesaugt werden. Hierdurch verschlechtert sich langfristig die Schmierung des Wälzlagers, wodurch sich die Lebensdauer der Vakuumpumpe erheblich verringert.

Aus US 2,674,953 ist eine stationäre Vakuumpumpe bekannt, bei der beiden Wälzlagern zwischen dem Wälzlager und dem Pumpenwerk jeweils ein Belüftungsraum zugeordnet ist, der über eine radiale Belüftungsleitung mit atmosphärischem Druck verbunden ist.

Aufgabe der Erfindung ist es demgegenüber, eine elektrische Kfz-Vakuumpumpe mit verlängerter Lebensdauer zu schaffen.

Diese Aufgabe wird erfindungsgemäß gelöst mit einer elektrischen Kfz-Vakuumpumpe mit den Merkmalen des Patentanspruches 1.

Die erfindungsgemäße elektrische Kfz-Vakuumpumpe weist ein Motormodul und ein daran angeflanschtes Pumpenmodul auf. Das Motormodul weist eine statorseitige Motorspule und eine Motorwelle auf, die einen Motorrotor trägt. Die Motorwelle ist durch ein Fest-Wälzlager und ein Los-Wälzlager an dem Gehäuse des Motormoduls gelagert.

Das Pumpenmodul ist ein trockenlaufendes Drehschieber-Pumpenmodul mit einer fliegend gelagerten Pumpenrotorwelle. Die Pumpenrotorwelle weist daher kein eigenes Lager auf, sondern ragt als starre Verlängerung der Motorwelle in das Pumpenmodul hinein. Die Pumpenrotorwelle hält mittelbar oder unmittelbar mehrere Drehschieber, die die rotierenden Pumpkammern in Umfangsrichtung begrenzen und voneinander trennen.

Das Fest-Wälzlager des Motormoduls ist axial zwischen dem Motorrotor und dem Pumpenmodul angeordnet, so dass das Los-Wälzlager an dem distalen Ende des der Motorwelle angeordnet ist. Auf diese Weise werden die wärmebedingten axialen Längenänderungen der Pumpenrotorwelle auf ein Minimum reduziert, was insbesondere bei einer trockenlaufenden Drehschieberpumpe kleine Leckspalte ermöglicht, die einen hohen Pumpen-Wirkungsgrad gewährleisten

Zwischen dem Festlager und dem Pumpenmodul ist ein Ringkanal vorgesehen, der an das Festlager axial proximal unmittelbar angrenzt, so dass das Festlager über den Ringkanal unmittelbar belüftet wird. Ferner ist mindestens eine beispielsweise radial verlaufende Belüftungsleitung vorgesehen, die den Ringkanal mit der die Vakuumpumpe umgebenden Atmosphäre verbindet. Der Ringkanal ist fluidisch ausschließlich über die Belüftungsleitung mit der Atmosphäre verbunden. Von dem Ringkanal gehen ausschließlich Belüftungsleitungen zur Atmosphäre, andere Leitungen münden nicht in den Ringkanal. Insbesondere ist der Ringkanal nicht mit dem Pumpenmodul verbunden und ist die Belüftungsleitung keine Ansaugleitung des Pumpenmoduls. Der Pumpeneinlass ist separat von den Belüftungsleitungen ausgebildet.

An beiden axialen Seiten des Fest-Wälzlagers herrscht auf diese Weise jederzeit ein statischer atmosphärischer Luftdruck, so dass das Schmiermittel nicht aus dem Fest-Wälzlager in das Pumpenmodul abgesaugt werden kann. Es herrscht auch keine nennenswerte Luftströmung in dem Ringkanal. Hierdurch wird die Lebensdauer des axial zwischen der dem Motorrotor und dem Pumpenmodul angeordneten Fest-Wälzlagers erheblich verlängert. Erfindungsgemäß ist der Außendurchmesser des Ringkanals kleiner als der Außendurchmesser des Fest- Wälzlagers.

Gemäß einer besonders bevorzugten Ausführungsform ist das Fest- Wälzlager, als Kugellager ausgebildet, das insbesondere langfristig eine hohe axiale Lagerungspräzision aufweist. Um insbesondere die axiale Lagerungspräzision des Kugellagers auch langfristig zu gewährleisten, ist eine ausreichende Schmierung mit Schmiermittel unerlässlich.

Gemäß einer bevorzugten Ausführungsform ist der Ringspalt zwischen der Motorwelle bzw. Pumpenrotorwelle und der Wellenöffnung in der Trennwand zwischen dem Motormodul und dem Pumpenmodul durch eine Spaltdichtung abgedichtet. Eine Spaltdichtung ist eine einfache und preiswerte Dichtung, die jedoch prinzipbedingt insbesondere bei einem Druckgefälle von mehr als 950 Millibar nicht verlustfrei arbeitet. Durch die atmosphärische Belüftung des Fest-Wälzlagers über den Ringspalt und die Belüftungsleitung hat der Luft-Leckstrom durch die Spaltdichtung hindurch in Richtung Pumpenmodul jedoch keine schädliche Wirkung mehr bezüglich der Schmierung des Fest-Wälzlagers.

Im Folgenden wird unter Bezugnahme auf die Zeichnungen ein Ausführungsbeispiel der Erfindung näher erläutert.

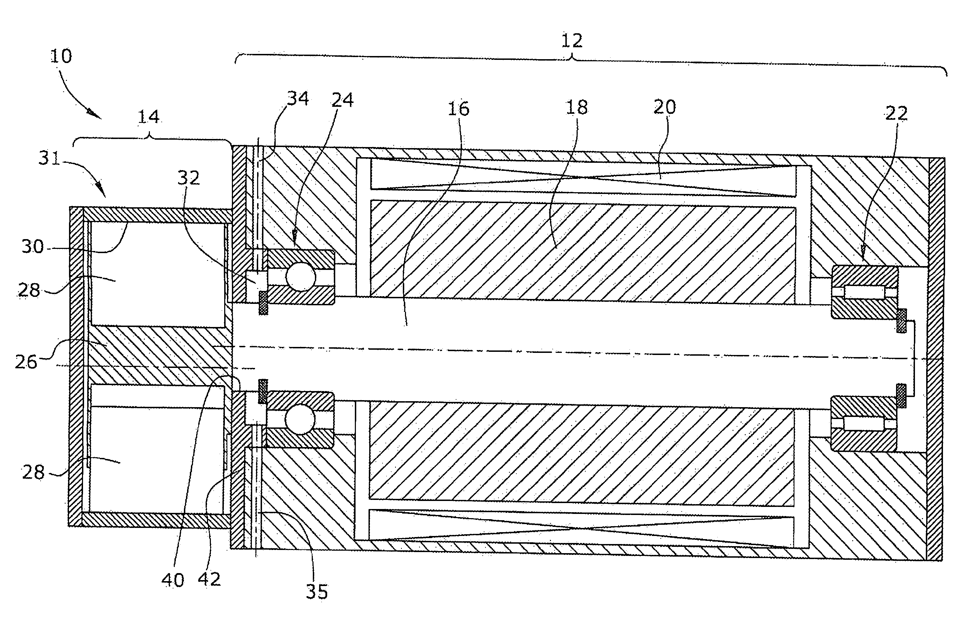

Die Figur zeigt einen Längsschnitt einer elektrischen Kfz-Vakuumpumpe mit einem atmosphärisch belüfteten Fest-Wälzlager.

In der Figur ist ein Längsschnitt einer elektrischen Kfz-Vakuumpumpe 10 dargestellt, die aus zwei axial aneinander montierten Modulen besteht, nämlich einem Motormodul 12 und einem Pumpenmodul 14. Die Vakuumpumpe 10 dient in einem Kraftfahrzeug zur Bereitstellung von Vakuum mit einem absoluten Druck von ca. 25 Millibar.

Das Motormodul 12 weist eine statorseitige Motorspule 20 auf, die von einer nicht dargestellten Motorsteuerung angesteuert wird. In dem

Motormodul 12 ist eine Motorwelle 16 angeordnet, die von einem distalen Los-Wälzlager 22 und einem proximalen Fest-Wälzlager 24 drehbar an dem an einem Motorgehäuse gelagert ist. Das Los-Wälzlager 22 ist als Zylinderlager ausgebildet, wohingegen das Fest-Wälzlager 24 als Kugellager ausgebildet ist. Das Fest-Wälzlager 24 enthält ein Schmiermittel mit fester Konsistenz. Die Motorwelle 16 trägt einen drehfest mit ihr verbundenen Motorrotor 18, der permanentmagnetisch erregt ist.

An die Motorwelle 16 schließt sich eine fliegend gelagerte Pumpenrotorwelle 26 an, die beispielsweise mit der Motorwelle fest verschraubt ist. Die Pumpenrotorwelle 26 ist nicht mehr durch ein eigenes Lager gelagert, sondern ragt "fliegend" in den Pumpeninnenraum 30 hinein, der von einem Pumpengehäuse 31 umschlossen ist. Die Pumpenrotorwelle 26 hält mehrere Drehschieber 28, die rotierende Pumpkammern begrenzen bzw. voneinander trennen.

An der proximalen Seite des Fest-Wälzlagers 24 grenzt axial unmittelbar ein Ringkanal 32 an, der über zwei radiale Belüftungsleitungen 34,35 mit der die Vakuumpumpe 10 umgebenden Atmosphäre unmittelbar und fluidisch praktisch widerstandsfrei verbunden ist. Andere Leitungen gehen von dem Belüftungskanal nicht aus, insbesondere keine Leitung in das Pumpenmodul 14.

Der Ringspalt zwischen der Motorwelle 16 und der eine entsprechende Wellenöffnung aufweisenden Trennwand 42 ist durch eine Spaltdichtung 40 abgedichtet.

## Patentansprüche

1. Elektrische Vakuumpumpe (10) für ein Kraftfahrzeug mit
einem Motormodul (12), das eine statorseitige Motorspule (20) und eine einen Motorrotor (18) tragende Motorwelle (16) aufweist, die durch ein Fest-Wälzlager (24) und ein Los-Wälzlager (22) gelagert ist, und
einem trockenlaufenden Drehschieber-Pumpenmodul (14) mit einer fliegend gelagerten Pumpenrotorwelle (26), die mehrere Drehschieber (28) hält und die starr mit der Motorwelle (16) verbunden ist,
**dadurch gekennzeichnet, dass**
das Fest-Wälzlager (24) axial zwischen dem Motorrotor (18) und dem Pumpenmodul (14) angeordnet ist,
zwischen dem Fest-Wälzlager (24) und dem Pumpenmodul (14) ein Ringkanal (32) vorgesehen ist, der an das Fest-Wälzlager (24) unmittelbar angrenzt,
mindestens eine Belüftungsleitung (34) vorgesehen ist, die den Ringkanal (32) unmittelbar mit der die Vakuumpumpe (10) umgebenden Atmosphäre verbindet, wobei der Ringkanal (32) fluidisch getrennt ist von dem Pumpenmodul (14), und
der Außendurchmesser des Ringkanals (32) kleiner als der Außendurchmesser des Fest-Wälzlagers (24) ist.

2. Elektrische Vakuumpumpe (10) nach Anspruch 1, wobei das Fest-Wälzlager (24) als Kugellager ausgebildet ist.

3. Elektrische Vakuumpumpe (10) nach einem der vorangegangenen Ansprüche, wobei der Ringspalt zwischen der Welle (16) und der das Motormodul (12) und das Pumpenmodul (14) trennenden Trennwand (42) durch eine Spaltdichtung (40) abgedichtet ist.

## Claims

1. An electric vacuum pump (10) for a motor vehicle, comprising
a motor module (12) having a stator-side motor coil (20) and a motor shaft (16) carrying a motor rotor (18), the shaft being supported by a fixed roller bearing (24) and a floating roller bearing (22), and
a dry-running rotary vane pump module (14) with a cantilevered rotor shaft (26) that supports a plurality of rotary vanes (28) and is rigidly connected with the motor shaft (16),
**characterized in that**
the fixed roller bearing (24) is arranged axially between the motor rotor (18) and the pump module (14),
an annular channel (32) is provided between the fixed roller bearing (24) and the pump module (14), said annular channel (32) directly adjoining the fixed roller bearing (24),
at least one vent line (34) is provided that connects the annular channel (32) directly with the atmosphere surrounding the vacuum pump (10), the annular channel (32) being fluidically separated from the pump module (14), and
the outer diameter of the annular channel (32) is smaller than the outer diameter of the fixed roller bearing (24).

2. The electric vacuum pump (10) of claim 1, wherein the fixed roller bearing (24) is designed as a ball bearing.

3. The electric vacuum pump (10) of one of the preceding claims, wherein the annular gap between the shaft (16) and the partitioning wall (42) separating the motor module (12) from the pump module (14) is sealed by means of a gap seal (40).

## Revendications

1. Pompe à vide électrique (10) pour véhicule automobile, comprenant:
un module moteur (12) avec une bobine moteur (20), coté stator, et: un arbre de moteur (16) portant un rotor de moteur (18), ledit arbre étant supporté par un palier fixe à roulement (24) et un palier libre à roulement (22), et
un module de pompe rotative à palettes (14) fonctionnant à sec avec un arbre de pompe de rotor (26) monté flottant qui supporte plusieurs palettes (28) et qui est solidarisé de manière rigide à l'arbre de moteur (16),
**caractérisée en ce que**
ledit palier fixe à roulement (24) est disposé axialement entre ledit rotor de moteur (18) et le module de pompe (14),
un canal annulaire (32) est prévu entre ledit palier fixe à roulement (24) et: ledit module de pompe (14), ledit canal immédiatement contigu au palier fixe à roulement (24),
au moins une conduit de ventilation (34) reliant ledit conduit annulaire (32) directement à l'atmosphère entourant ladite pompe à vide (10), ledit canal annulaire (32) étant séparé fluidiquement dudit module de pompe (14), et
le diamètre extérieur dudit canal annulaire (32) est inférieur au diamètre extérieur dudit palier fixe à roulement (24).

2. Pompe à vide électrique (10) selon la revendication 1, dans lequel ledit palier fixe à roulement (24) est en forme d'un roulement à billes.

3. Pompe à vide électrique (10) selon l'une quelconque des revendications précédentes, dans lequel l'interstice annulaire entre l'arbre (16) et la cloison (42) séparant le module moteur (12) et ledit module de pompe (14) est étanchéifiée par un joint d'étanchéité de l'interstice (42)
